# EUROPEAN PATENT APPLICATION

(11) **EP 4 145 568 A1**
(43) Date of publication of application: **08.03.2023**
(21) Application number: 21797271.0
(22) Date of filing: 29.04.2021
(51) Int. Cl.: H01M 4/525, H01M 4/505, C01G 53/00, H01M 10/052

(54) **CATHODE ACTIVE MATERIAL FOR LITHIUM SECONDARY BATTERY, PRODUCTION METHOD THEREOF, AND LITHIUM SECONDARY BATTERY COMPRISING SAME**

(30) Priority: 29.04.2020 KR 20200052907
(71) Applicant: SM Lab Co., Ltd., Ulsan 44953 (KR)
(72) Inventor: SEO, Min Ho, Hanam-si, Gyeonggi-do 12946 (KR); KIM, Ji Young, Ulju-gun, Ulsan 44920 (KR)
(74) Representative: Loyer & Abello
(86) International application number: PCT/KR2021/005462
(87) International publication number: WO 2021/221480

(57) **Abstract**

Provided is a positive active material, a method of preparing the same, and a lithium secondary battery including the positive active material, wherein the positive active material includes a plurality of first particles, an aggregate of a plurality of first particles, or a combination thereof, wherein the first particles have a crystal structure of an α-NaFeO₂ type, and include a lithium transition metal oxide including at least one of Ni, Co, Mn and Al, a part of transition metal sites in a crystal lattice of the crystal structure are substituted with a doping element M, and a part of oxygen sites in the crystal lattice are substituted with sulfur (S), M includes Mg, Ti, Zr, W, Si, Ca, B, V, or a combination thereof, 1,000 ppm to 4,000 ppm of M is included in the lithium transition metal oxide, and 1,000 ppm or less of S is included in the lithium transition metal oxide.

## Description

### TECHNICAL FIELD

The present disclosure relates to a positive active material for a lithium secondary battery of a novel composition, a method of manufacturing the same, and a lithium secondary battery including the positive active material.

### BACKGROUND ART

Since lithium secondary batteries were commercialized by Sony in 1991, demand has been rapidly increasing in various fields from small home appliances such as mobile IT products to medium and large electric vehicles and energy storage systems. Particularly, although a low-cost high-energy positive electrode material is essential for medium-to-large sized electric vehicles and energy storage systems, cobalt, a main raw material of single crystal LiCoO₂ (LCO), which is a currently commercialized positive active material, is expensive.

Therefore, as a positive active material for a medium-to-large sized secondary battery, Ni-based positive active materials represented by LiNiₓCo_{y}Mn_{z}O₂ (NCM, x+y+z=1) and LiNiₓCo_{y}Al_{z}O₂ (NCA, x+y+z=1), in which a part of Co is substituted with other transition metals, are used instead of LCO, and these NCM and NCA based-positive active materials have an advantage in that nickel, a main raw material, is inexpensive and has high reversible capacity. In particular, NCM and NCA, which have 50 mol% or more of Ni, are attracting attention in terms of high capacity. Generally, such Ni-based positive active materials are prepared by mixing a transition metal compound precursor synthesized by a co-precipitation method with a lithium source and then synthesizing by using a solid-phase synthesis method. However, the synthesized Ni-based positive electrode material is present in the form of secondary particles, which are formed by the aggregation of small first particles, and in the long-term, there is an issue of micro-cracks forming inside the secondary particles during charge/discharge processes. Micro-cracks induce side reactions between a new interface of the positive active material and an electrolyte solution, resulting in deterioration of battery performance, such as reduced stability due to generation of gas and degradation of battery performance due to depletion of an electrolyte solution. In addition, an increase in electrode density (> 3.3 g/cc), which is required for the implementation of high energy density, causes a plunge in an initial lifespan by inducing collapse of the secondary particles and depletion of an electrolyte solution due to side reactions with the electrolyte solution. In the end, Ni-based positive active materials in the form of secondary particles synthesized by a co-precipitation method in the art are not capable of implementing high energy density.

In order to solve the issues of the Ni-based positive active material in the form of secondary particles, single crystal Ni-based positive active materials have been studied recently. Single crystal Ni-based positive active materials are capable of implementing excellent electrochemical performance, because particles do not collapse when electrode density increases (> 3.3 g/cc) in order to implement high energy density. However, such single crystal Ni-based positive active materials, when electrochemically evaluated, have issues of structural and/or thermal instability due to unstable Ni³+ and Ni⁴+ ions leading to reduced battery stability. Therefore, for the development of high-energy lithium secondary batteries, there is still a demand for technologies for stabilizing unstable Ni ions of single crystal Ni-based positive active materials.

### DESCRIPTION OF EMBODIMENTS

### TECHNICAL PROBLEM

An aspect is to provide a positive active material that does not crack at a high electrode density, and at the same time, having improved high energy density and long life characteristics.

### SOLUTION TO PROBLEM

According to an aspect, provided is a positive active material including: a plurality of first particles, an aggregate of a plurality of first particles, or a combination thereof; wherein the first particles have a crystal structure of an α-NaFeO₂ type, include a lithium transition metal oxide including at least one of Ni, Co, Mn, and Al, and a part of transition metal sites in a crystal lattice of the crystal structure are substituted with a doping element M, and a part of oxygen sites in the crystal lattice are substituted with sulfur (S), M includes Mg, Ti, Zr, W, Si, Ca, B, V, or a combination thereof, 1,000 ppm to 4,000 ppm of M is included in the lithium transition metal oxide, and 1,000 ppm or less of S is included in the lithium transition metal oxide.

According to another aspect, provided is a method of manufacturing a positive active material including: obtaining a lithium transition metal oxide precursor by mixing an Li-containing compound, a transition metal compound, a sulfur (S)-containing compound, and an element M-containing compound; and heat-treating the precursor to obtain the above-described positive active material including a plurality of first particles, at least one secondary particle including an aggregate of a plurality of first particles, or a combination thereof.

According to still another aspect, provided is a positive electrode including the positive active material.

According to still another aspect, provided is a lithium secondary battery including: the positive electrode; a negative electrode; and an electrolyte.

### ADVANTAGEOUS EFFECTS OF DISCLOSURE

A positive active material including a lithium transition metal oxide provided according to an aspect of the present disclosure has increased capacity per volume, and improved lifespan stability, due to stabilization of unstable Ni ions present in high-Ni-based lithium transition metal oxides and prevention of deterioration during charging and discharging, by including single crystals and single particles, aggregates of such single particles, or a combination thereof; having a part of the transition metal substituted with a doping element M, and a part of oxygen substituted with S; and including 1,000 ppm to 4,000 ppm of M, and 1,000 ppm or less of S.

### BRIEF DESCRIPTION OF DRAWINGS

FIG. 1 shows scanning electron microscope (SEM) images of positive active materials of Preparation Examples 6 to 9.
FIG. 2 shows a graph showing results of S2p XPS analysis of Preparation Example 1.
FIG. 3 shows a graph showing capacity retention rates according to cycles for Examples 1 to 3 and Comparative Examples 2, 5, 6, 9 and 11.
FIG. 4 shows a graph showing capacity retention rates according to cycles for Examples 4 and 5 and Comparative Examples 12 to 14.
FIG. 5 is a schematic diagram of a lithium battery according to an example embodiment.

### <Explanation of reference numerals for major elements of the drawings>

1: Lithium battery 2: Negative electrode
3: Positive electrode 4: Separator
5: Battery Case 6: Cap Assembly

### MODE OF DISCLOSURE

The present inventive concept described hereinafter may be modified in various ways, and may have many examples, and thus, certain examples are illustrated in the drawings, and are described in detail in the specification. However, this does not intend to limit the present inventive concept within particular embodiments, and it should be understood that the present disclosure includes all the modifications, equivalents, and replacements within the idea and technical scope of the present inventive concept.

Terms used herein were used to describe particular examples, and not to limit the present inventive concept. As used herein, the singular of any term includes the plural, unless the context otherwise requires. The expression of "include" or "have", used herein, indicates existence of a characteristic, a number, a phase, a movement, an element, a component, a material or a combination thereof, and it should not be construed to exclude in advance existence or possibility of existence of at least one of other characteristics, numbers, movements, elements, components, materials or combinations thereof. As used herein, "/" may be interpreted to mean "and" or "or" depending on the context.

In the drawings, a thickness is enlarged or reduced to clearly represent various layers and regions. The same reference numerals were attached to similar parts throughout the disclosure. Throughout the disclosure, when a layer, a film, a region, or a plate is described to be "on" or "above" something else, it not only includes a case that it is right above something else but also cases in which other portions are present in-between. Terms like "first", "second", and the like may be used to describe various components, but the components are not limited by the terms. The terms are used merely for a purpose of distinguishing one component from other components.

Hereinafter, a positive active material, a method of preparing the same, and a lithium secondary battery including a positive electrode including the positive active material according to example embodiments will be described in more detail.

A positive active material according to an embodiment may include: a plurality of first particles, an aggregate of a plurality of first particles, or a combination thereof, wherein the first particles may have a crystal structure of an α-NaFeO₂ type, and may include a lithium transition metal oxide including at least one of Ni, Co, Mn and Al, a part of transition metal sites in a crystal lattice of the crystal structure may be substituted with a doping element M, and a part of oxygen sites in the crystal lattice may be substituted with sulfur (S), M may include Mg, Ti, Zr, W, Si, Ca, B, V, or a combination thereof, 1,000 ppm to 4,000 ppm of M may be included in the lithium transition metal oxide, and 1,000 ppm or less of S may be included in the lithium transition metal oxide.

Here, a term "aggregate of first particles" means that surfaces of one or more first particles are arranged to contact each other during the heat treatment of the first particles. In addition, the term "aggregate of first particles" means that when a coating layer is present on surfaces of first particles, the surfaces of a plurality of individually coated first particles are arranged to be in contact with each other, and an aggregate of first particles is distinguished from a secondary particle, which is in a form in which a coating layer is formed on the outer surface of the aggregate where a plurality of first particles are aggregated, and a plurality of first particles are nested inside the coating layer.

The positive active material according to an embodiment of the present disclosure has high capacity and long life characteristics, by having a part of transition metal substituted with a doping element M, and a part of O substituted with S, wherein M is included in an amount of 1,000 ppm to 4,000 ppm, and S is included in an amount of 1,000 ppm or less. When S exceeds 1,000 ppm, initial discharge capacity is lowered, and when a total amount of the doping element does not satisfy the above range, lifespan characteristics are deteriorated. Accordingly, when the content ratio of the doping element and the content ratio of the element S are satisfied, high capacity and long life characteristics may be simultaneously achieved.

According to an embodiment, the lithium transition metal oxide may include Ni, and 80 mol% or more of nickel may be included in the lithium transition metal oxide.

For example, 81 mol% or more, 82 mol% or more, 83 mol% or more, 84 mol% or more, 85 mol% or more, 86 mol% or more, or 87 mol% or more of nickel may be included in the lithium transition metal oxide.

According to an embodiment, 1,200 ppm to 4,000 ppm of M may be included in the lithium transition metal oxide. For example, 1,200 ppm to 3,800 ppm of M may be included.

According to an embodiment, the lithium transition metal oxide may include W, in an amount of 900 ppm to 2,500 ppm.

According to an embodiment, the doping element may include Mg, Ti, W, Si, Ca, V, or a combination thereof. For example, the doping element may be Mg, Ti, and W.

According to an embodiment, some lithium sites in the crystal lattice of the lithium transition metal oxide may be substituted with one or more alkali metal elements.

For example, the alkali metal element may include Na, K, or a combination thereof.

According to an embodiment, 100 ppm to 250 ppm of the alkali metal elements may be included in the lithium transition metal oxide. For example, the alkali metal element may be included in an amount of 120 ppm to 230 ppm, 130 ppm to 220 ppm, or 140 ppm to 210 ppm.

According to an embodiment, a molar ratio of Li / a molar ratio of transition metals may be less than 1 in the lithium transition metal oxide. The positive active material is distinguished from an overlithiated positive active material, in which Li has a molar ratio greater than 1, and has high capacity and long life characteristics due to introduction of an alkali metal element, a doping element, and an element S, even though the molar ratio of Li is less than 1.

According to an embodiment, the lithium transition metal oxide may be represented by the following Formula 1:

Formula 1 Li₁₋ₓAₓM1_{1-y}M2_{y}O_{2-z}S_{z},

wherein in Formula 1, A is sodium (Na) or potassium (K), M1 includes Ni, Co, Mn, Al, or a combination thereof, M2 includes Mg, Ti, Zr, W, Si, Ca, B, V, or a combination thereof, and 0<x≤0.05, 0<y<0.05, and 0<z<0.01.

For example, A may be Na. For example, y may be 0<y<0.02.

According to an embodiment, the lithium transition metal oxide may be represented by the following Formula 2:

Formula 2 Li₁₋ₓNaₓM1_{1-α-β}W_{α}M3_{β}O_{2-z}S_{z},

wherein in Formula 2, M1 includes Ni, Co, Mn, Al, or a combination thereof, M2 includes Mg, Ti, Zr, Si, Ca, B, V, or a combination thereof, and 0<x≤0.05, 0<α≤0.01, 0<β≤0.02, and 0<z<0.01.

For example, it may be 0<β≤0.01.

As W is included in the range of molar ratio of 0<α≤0.01, the structural stability of the lithium transition metal oxide is improved. When a substitution molar ratio of W exceeds 0.01, a decrease in structural stability is induced, due to torsion in the crystal structure, and WO₃ is formed as an impurity, and degradation of electrochemical properties may result.

According to an embodiment, the lithium transition metal oxide may be represented by the following Formula 3:

Formula 3 tLi₁₋ₓNaₓM1_{1-α-γ-δ}W_{α}Mg_{γ}Ti_{δ}O_{2-z}S_{z}.

wherein in Formula 3, M1 includes Ni, Co, Mn, Al, or a combination thereof, and 0<x≤0.05, 0<α≤0.01, 0<y≤0.01, 0<δ≤0.01, and 0<z<0.01.
x may be 0<x≤0.05. Here, x refers to a substitution molar ratio of Na for Li in the lithium transition metal oxide represented by Formula 3. As a part of Li of the lithium transition metal oxide represented by Formula 3 is substituted by Na, structural stability may be improved. When Li in a lattice space is substituted by Na, because of intervention of Na which has an ionic radius larger than that of Li, expansion of the crystal structure due to repulsive force between oxygen atoms in a lithium transition metal oxide is suppressed when lithium is desorbed in a charging state, and as a result, structural stability of the lithium transition metal oxide is improved even when charging is repeated.

According to an embodiment, γ may be 0<γ≤0.005. Here, γ refers to a substitution molar ratio of Mg for an element M1 in the lithium transition metal oxide represented by Formula 3. When a substitution molar ratio of Mg satisfies the range, structural expansion of the lithium transition metal oxide is suppressed in a charging state.

According to an embodiment, δ may be 0<δ≤0.005. Here, δ refers to a substitution molar ratio of Ti for an element M1 in the lithium transition metal oxide represented by Formula 3. When a substitution molar ratio of Ti satisfies the range, structural expansion of the lithium transition metal oxide is suppressed in a charging state.

When the lithium transition metal oxide is substituted by W, Mg, and Ti in the molar ratio, structural expansion of the crystal due to interaction between oxygen molecules in the lithium transition metal oxide is suppressed even when lithium is desorbed in a charging state, and thus, structural stability and lifespan characteristics are improved.

According to an embodiment, when α, γ and δ satisfy the above ranges, structural stability of the lithium transition metal oxide is guaranteed. When any one of α, γ, and δ is outside the range, impurities are formed, which not only may act as a resistance when lithium is desorbed, but also may cause a collapse of the crystal structure when charging is repeated.

According to an embodiment, in Formula 3, γ and δ may be 0<γ≤0.003, 0<δ≤0.003, respectively.

For example, in Formula 3, it may be γ=δ. When γ = δ, (for example, when the molar ratios of Mg and Ti are the same), charge balance in the lithium transition metal oxide is achieved during charging and discharging, so that collapse of the crystal structure is suppressed and structural stability is improved, and as a result, lifespan characteristics are improved.

According to an embodiment, z may be 0<z≤0.01. Here, z refers to a substitution molar ratio of S for an element O in the lithium transition metal oxide represented by Formula 3.

As a part of the oxygen is substituted by S, binding force with the transition metal is increased, and transition of the crystal structure of the lithium transition metal oxide is suppressed, and as a result, structural stability of the lithium transition metal oxide is improved.

On the other hand, when a substitution molar ratio of S exceeds 0.01, not only the crystal structure becomes unstable due to repulsive forces of S anions, but also a resistance layer is formed against lithium desorption during charging, and initial discharge capacity is reduced.

According to an embodiment, the lithium transition metal oxide may be a single particle. A single particle is distinguished from a secondary particle which is formed by the aggregation of a plurality of particles, or a particle in which a plurality of particles are aggregated and the perimeter of the aggregate is coated. When the lithium transition metal oxide has a form of single particles, the particles may be prevented from cracking even at a high electrode density. Therefore, implementation of a high energy density of the positive active material including the lithium transition metal oxide becomes possible. In addition, when single particles are used, cracking of particles may be suppressed during rolling, compared to when secondary particles are used, which are formed by aggregation of a plurality of single particles, and thus, implementation of high-energy density becomes possible, and lifespan deterioration due to cracking of the particles may be prevented.

According to an embodiment, the lithium transition metal oxide may have a single crystal. The term "single crystal" has a concept distinguished from that of "single particle". The term "single particle" refers to a particle formed as one particle, regardless of the type and number of the crystals inside, and the term "single crystal" refers to a particle having only one crystal inside. These single crystal lithium transition metal oxides not only have a very high structural stability, but also allow easier lithium ion conduction than poly-crystals, and have superior fast charging characteristics compared to poly-crystal active materials.

According to an embodiment, the positive active material is a single crystal and a single particle. When the positive active material is formed as a single crystal and a single particle, a structurally stable and high-density electrode may be implemented, and a lithium secondary battery including the same may simultaneously have an improved lifespan characteristics and a high energy density.

According to an embodiment, the lithium transition metal oxide may be represented by any one of the following Formulas 4-1 to 4-3:

Formula 4-1 Li₁₋ₓ₁Naₓ₁Niₐ₁Co_{b1}Mn_{c1}W_{d1}Mgₑ₁Ti_{f1}O_{2-z1}S_{z1},

Formula 4-2 Li₁₋ₓ₂Naₓ₂Niₐ₂Co_{b2}Al_{c2}W_{d2}Mgₑ₂Ti_{f2}O_{2-z2}S_{z2},

Formula 4-3 Li₁₋ₓ₃Naₓ₃Niₐ₃Co_{b3}W_{d3}Mgₑ₃Ti_{f3}O_{2-z3}S_{z3},

wherein in Formula 4-1, 0<x1≤0.05, 0<a1<1, 0<b1<1, 0<c1<1, 0<d1 ≤0.01, 0<d1 ≤0.005, 0<e1≤0.005, 0<(1-x1)/(a1+b1+c1+d1+e1+f1)<1, 0.7<a1 /(b1+c1+d1+e1+f1)<1, 0<(b1+c1)/(a1 +b1+c1+d1+e1+f1)<0.2, and 0<z1<0.01,
in Formula 4-2, 0<x2≤0.05, 0<a2<1, 0<b2<1, 0<c2<1, 0<d2≤0.01, 0<d2≤0.005, 0<e2≤0.005, 0<(1-x2)/(a2+b2+c2+d2+e2+f2)<1, 0.7<a2/(b2+c2+d2+e2+f2)<1, 0<(b2+c2)/(a2+b2+c2+d2+e2+f2)<0.2, and 0<z2<0.01,
and in Formula 4-3, 0<x3≤0.05, 0<a3<1, 0<b3<1, 0<d3≤0.01, 0<d3≤0.005, 0<e3≤0.005, 0<(1-x3)/(a3+b3+d3+e3+f3)<1, 0.7<a3/(b3+d3+e3+f3)<1, 0<b3/(a3+b3+d3+e3+f3)<0.2, and 0<z3<0.01.

The lithium transition metal oxide satisfying the composition may stabilize unstable Ni ions inside, and have high energy density and long life stability.

In case of a general positive active material including a high-nickel-based lithium nickel-cobalt-manganese oxide, stabilization of unstable Ni ions is essential, and when W, Mg and Ti substitute some of the transition metal sites in the crystal, the positive active material may have a overall balance of electric charges so that oxidation of Ni (II) ions to unstable Ni (III) or Ni (IV) ions may be suppressed, and unstable Ni (III) or Ni (IV) ions may be reduced to Ni (II). On the other hand, loss of conductivity generated by substitution of a part of the transition metal by W, Mg and Ti, which are heterogeneous elements, is compensated by substituting a part of O with S, and as a part of Li is substituted with Na, reduction of conductivity of Li due to a structural deformation during charge/discharge processes is suppressed, and thus, a structurally stable, high-capacity and long-life single crystal positive active material may be obtained.

According to an embodiment, an average particle diameter (D₅₀) of the lithium transition metal oxide may be 0.1 µm to 20 µm. For example, the average particle diameter (D₅₀) may be 0.1 µm to 15 µm, 0.1 µm to 10 µm, 1 µm to 20 µm, 5 µm to 20 µm, 1 µm to 15 µm, 1 µm to 10 µm, 5 µm to 15 µm, or 5 µm to 10 µm. When the average particle diameter of the lithium transition metal oxide is within the range, a desirable energy density per volume may be implemented. When the average particle diameter of the lithium transition metal oxide exceeds 20 µm, charge/discharge capacity may plunge, and when the average particle diameter of the lithium transition metal oxide is less than 0.1 µm, a desirable energy density per volume may be difficult to obtain.

Hereinafter, a method of preparing a positive active material according to an aspect will be described in detail.

According to another aspect, provided is a method of manufacturing a positive active material including: obtaining a lithium transition metal oxide precursor by mixing an Li-containing compound, a transition metal compound, a sulfur (S)-containing compound, and an element M-containing compound; and heat-treating the precursor to obtain a positive active material including a plurality of first particles, an aggregate of a plurality of first particles, or a combination thereof, wherein the first particle has a crystal structure of an α-NaFeO₂ type and includes a lithium transition metal compound including at least one of Ni, Co, Mn and Al, a part of transition metal sites are substituted with a doping element M in the crystal lattice of the crystal structure, and a part of O sites are substituted with sulfur (S), M includes Mg, Ti, Zr, W, Si, Ca, B, V, or a combination thereof, 1,000 ppm to 4,000 ppm of M is included in the lithium transition metal oxide, and 1,000 ppm or less of S is included in the lithium transition metal oxide.

In general, for synthesis of a single particle material, transition metal precursors/lithium precursors are dry-mixed and heat-treated at a high temperature (>1,000 °C), however, high reversible capacity is difficult to implement due to structural changes in the positive active material due to reduction of nickel ions during high-temperature calcination, and excessive residual lithium is present on the surface of the active material, causing stability issues.

On the other hand, for synthesis of a single particle material capable of implementing high reversible capacity, the present inventors induced crystal growth at a low temperature of less than 1,000 °C, after mixing raw materials for synthesis together with a crystal growth catalyst. In this regard, the crystal growth catalyst has a melting point that allows it to melt at the calcination temperature of the positive active material. Such a synthesis method has a lower heat treatment temperature compared to the synthesis method where a mixture of transition metal precursors/lithium precursors is heat-treated at a high temperature in a dry process, and thus, the structural change of the positive active material is small, implementation of high reversible capacity is possible, and it is possible to synthesize a material with less residual lithium on the surface.

In addition, since the crystal growth catalyst is melted at the calcination temperature of the positive active material to promote uniform mixing and crystal growth of the raw materials for synthesis, overall processing time may be shortened, and there is an advantage in that manufacturing costs may be reduced.

According to an embodiment, the crystal growth catalyst may include an alkali metal salt containing an element S, for example, lithium salt. When the crystal growth catalyst includes an element S, the element S permeates into the crystal of the positive active material during calcination, and some oxygen sites in the crystal lattice may be substituted with the element S. In this regard, it is preferable that 1,000 ppm or less element S is substituted with respect to the total positive active material, and when S exceeds 1,000 ppm, capacity is lowered. This is thought to be because the excess element S acts as a resistance layer that hinders movement of lithium ions during charging and discharging of the lithium secondary battery.

The mixing includes mechanically mixing the compounds containing specific elements. The mechanical mixing may be performed as a dry process. The mechanical mixing is forming a uniform mixture by pulverizing and mixing the materials to be mixed by applying a mechanical force. The mechanical mixing may be performed by, for example, using a mixing device such as a ball mill, which uses chemically inert beads, a planetary mill, a stirred ball mill, or a vibrating mill. In this regard, in order to maximize the mixing effect, alcohols such as ethanol, and higher fatty acids such as stearic acid may be selectively added in small quantities.

The mechanical mixing may be carried out in an oxidizing atmosphere, so as to prevent reduction of a transition metal in a transition metal source (for example, an Ni compound), and to implement structural stability of the active material.

The lithium-containing compound may include, but is not limited to, a hydroxide, an oxide, a nitride, a carbonate, or a combination thereof of lithium. For example, the lithium precursor may be LiOH or Li₂CO₃.

The transition metal compound may include, but is not limited to, a hydroxide, an oxide, a nitride, a carbonate, or a combination thereof of a transition metal including at least one of Ni, Co, Mn, and Al. For example, the transition metal compound may be Ni_{0.88}Co_{0.09}Al_{0.03}(OH)2, Ni_{0.80}Co_{0.10}Mn_{0.10}(OH)₂, etc.

The S-containing compound may be, for example, a lithium sulfate, as a crystal growth catalyst. For example, the S-containing compound may be Li₂SO₄. The crystal growth catalyst contributes to formation of single crystals and single particles, and when the crystal growth catalyst is not included, a positive active material in the form of secondary particles is synthesized. However, when such a crystal growth catalyst is used in a specific content ratio, an aggregate formed by the aggregation of single crystals and single particles, or single particles may be formed.

The element M-containing compound may include a hydroxide, an oxide, a nitride, a carbonate, or a combination thereof of an element including Mg, Ti, Zr, W, Si, Ca, B, V, or a combination thereof, but is not limited thereto, and for example, may be W(OH)₆, WO₃, Mg(OH)₂, MgCO₃, Ti(OH)₂, TiO₂ etc.

According to an embodiment, the Li-containing compound may include a hydroxide of lithium, an oxide of lithium, a nitride of lithium, a carbonate of lithium, or a combination thereof, and the S-containing compound may include lithium sulfate. For example, the Li-containing compound may include a hydroxide of lithium, and the S-containing compound may include lithium sulfate. Accordingly, an oxygen site in the crystal may be substituted by an element S, during the heat treatment process.

According to an embodiment, the Li-containing compound and the S-containing compound may be mixed in a molar ratio of 99:1 to 99.9:0.1.

When a ratio of the Li-containing compound and the S-containing compound exceeds 99:1, for example, when it becomes 98:2, initial discharge capacity is decreased due to an increase of resistance as excess S is introduced.

In addition, the lithium transition metal oxide precursor may further include a Na-containing compound.

The Na-containing compound may include, but is not limited to, a hydroxide, an oxide, a nitride, a carbonate, or a combination thereof of Na. For example, the Na-containing compound may be NaOH, Na₂CO₃, or a combination thereof.

After the mixing, heat-treating may be included. The heat-treating may include a first heat treatment, and a second heat treatment. The first heat treatment and the second heat treatment may be performed continuously, or there may be a break after the first heat treatment. In addition, the first heat treatment and the second heat treatment may be performed in the same chamber, or may be performed in different chambers.

A heat treatment temperature in the first heat treatment may be higher than a heat treatment temperature in the second heat treatment.

The first heat treatment may be performed at a heat treatment temperature of 800 °C to 1200 °C. The heat treatment temperature may be, for example, 850 °C to 1200 °C, 860 °C to 1200 °C, 870 °C to 1200 °C, 880 °C to 1200 °C, 890 °C to 1200 °C, or 900 °C to 1200 °C, but is not limited thereto, and includes all ranges formed by selecting any two points in the above range.

The second heat treatment may be performed at a heat treatment temperature of 700 °C to 800 °C. The heat treatment temperature may be, 710 °C to 800 °C, 720 °C to 800 °C, 730 °C to 800 °C, 740 °C to 800 °C, 750 °C to 800 °C, or 700 °C to 780 °C, 700 °C to 760 °C, 700 °C to 750 °C, or 700 °C to 730 °C, but is not limited thereto, and includes all ranges formed by selecting any two points in the above range.

According to an embodiment, heat treatment time in the first heat treatment may be shorter than heat treatment time in the second heat treatment.

For example, in the first heat treatment, the heat treatment time may be 3 hours to 5 hours, 4 hours to 5 hours, or 3 hours to 4 hours, but is not limited thereto, and includes all ranges formed by selecting any two points in the above range.

For example, in the second heat treatment, the heat treatment time may be 10 hours to 20 hours, or 10 hours to 15 hours, but is not limited thereto, and includes all ranges formed by selecting any two points in the above range.

The first heat treatment may include heat treating for 3 hours to 5 hours at a heat treatment temperature of 800 °C to 1200 °C.

The second heat treatment may include heat treating for 10 hours to 20 hours at a heat treatment temperature of 700 °C to 800 °C.

In the first heat treatment, the lithium transition metal oxide forms a positive active material of a layered structure, and induces growth of the particles at the same time, in order that a single crystal is formed. In the first heat treatment, it is thought that each of the first particles, in the lithium transition metal oxide in the form of secondary particles, is rapidly grown, and as the stress between the particles is not tolerated, the inside of the first particles is exposed, and the first particles are fused, so that a single crystal positive active material for a secondary battery is formed. In the second heat treatment, a heat treatment is performed at a lower temperature than in the first heat treatment for a long time, so as to increase crystallinity of the layered structure generated in the first heat treatment. Through the first and second heat treatments, a single-phase, single crystal, and single particle high-nickel-based positive active material may be obtained.

According to an embodiment, the lithium transition metal oxide prepared by the manufacturing method is a single crystal and a single particle, and the single crystal may have a layered structure. Furthermore, an average particle diameter of the lithium transition metal oxide may be 0.1 µm to 20 µm.

In addition, for a description related to the content of the lithium transition metal oxide, refer to the above.

In addition, in the lithium transition metal oxide prepared by the method of manufacturing a positive active material, transition metal sites in the structure are substituted with W, Mg, and Ti, O sites are substituted by element S, and Li sites are substituted by element Na, in order that oxidation of existing Ni²+ is suppressed, and reduction of unstable Ni³+ ions to Ni²+ ions is induced, and a lithium transition metal oxide having a structural stability and high density is obtained. Furthermore, the reduced Ni²+ ions and Li ions have similar ion radii, so that Li/Ni disordering is promoted, and Ni ions fill the empty lattice when Li is desorbed, and a structural stability of the crystal is promoted.

According to another aspect, a positive electrode including the aforementioned positive active material is provided.

According to still another aspect, provided is a lithium secondary battery including the positive electrode; a negative electrode; and an electrolyte.

The lithium secondary battery may have a capacity retention rate of 89 % or more, after 50 charge/discharge cycles, by including a positive active material including the above-described lithium transition metal oxide.

The lithium secondary battery has initial discharge capacity of 204 mAh/g or more.

The positive electrode and a lithium secondary battery including the same may be prepared in the following manner.

First, a positive electrode is prepared.

For example, a positive active material composition is prepared, in which the above-described positive active material, a conductive material, a binder, and a solvent are mixed. The positive active material composition may be directly coated on a metal current collector to prepare a positive electrode plate. Alternatively, the positive active material composition may be casted on a separate support, and then a film peeled off from the support may be laminated on the metal current collector to prepare a positive electrode plate. The positive electrode is not limited to a form listed above, and may be in a form other than the above forms.

For the conductive material, graphite such as natural graphite or artificial graphite; carbon black; conductive tubes such as carbon nanotubes; conductive whisker such as fluorocarbon, zinc oxide, potassium titanate; conductive metal oxides such as titanium oxide; may be used, but it is not limited thereto, and all that may be used as a conductive material in the related art may be used.

For the binder, vinylidene fluoride/hexafluoropropylene copolymer, polyvinylidene fluoride (PVDF), polyacrylonitrile, polymethyl methacrylate, a polytetrafluoroethylene, a mixture thereof, a metal salt, or a styrene butadiene rubber-based polymers may be used, but it is not limited thereto, and all that may be used as a binder in the related art may be used. For other examples of a binder, lithium salts, sodium salts, or calcium salts of the above-described polymers may be used.

For the solvent, N-methylpyrrolidone, acetone or water may be used, but it is not limited thereto, and all that may be used in the related art may be used.

Contents of the positive active material, conductive material, binder, and solvent are in levels typically used in a lithium battery. Depending on the use and configuration of the lithium battery, one or more of the conductive material, binder, and solvent may be omitted.

Next, a negative electrode is prepared.

For example, a negative active material composition is prepared by mixing a negative active material, a conductive material, a binder, and a solvent. The negative active material may be directly coated on a metal current collector which has a thickness of 3 µm to 500 µm, and may be dried to prepare a negative electrode plate. Alternatively, the negative active material composition may be casted on a separate support, and then a film peeled off from the support may be laminated on the metal current collector to prepare a negative electrode plate.

The negative electrode current collector is not particularly limited, as long as the negative electrode current collector does not cause a chemical change in the battery and has conductivity, and for example, copper, nickel, and copper treated with carbon on the surface may be used.

For the negative active material, any that may be used as a negative active material in the related art may be used. For example, the negative active material may include one or more selected from lithium metals, metals alloyable with lithium, transition metal oxides, non-transition metal oxides, and carbon-based materials.

For example, the metals alloyable with lithium may be Si, Sn, Al, Ge, Pb, Bi, Sb, and Si-Y alloy (Y may be an alkali metal, an alkaline earth metal, a group 13 element, a group 14 element, a transition metal, a rare earth element, or a combination thereof, and is not Si), Sn-Y alloy (Y may be an alkali metal, an alkaline earth metal, a group 13 element, a group 14 element, a transition metal, a rare earth element, or a combination thereof, and is not Sn), and the like. The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, or Te.

For example, the transition metal oxide may be lithium titanium oxide, vanadium oxide, lithium vanadium oxide, and the like.

For example, the non-transition metal oxide may be SnO₂, SiOₓ (0< x <2), and the like.

The carbon-based material may be crystalline carbon, amorphous carbon or a mixture thereof. The crystalline carbon may be amorphous, plate-like, flake-like, spherical or fibrous graphite, such as natural graphite or artificial graphite, and the amorphous carbon may be soft carbon (carbon calcined at a low-temperature) or hard carbon, a mesophase pitch carbide, a calcined coke, and the like.

In the negative active material composition, for a conductive material, binder, and solvent, the same may be used as in the case of the positive active material composition.

Contents of the negative active material, conductive material, binder, and solvent are in levels typically used in a lithium battery. Depending on the use and configuration of the lithium battery, one or more of the conductive material, binder, and solvent may be omitted.

Next, a separator to be inserted between the positive electrode and the negative electrode is prepared.

For the separator, all that are used in the art of lithium battery may be used. A separator having a low resistance to ionic movement of the electrolyte, and having an excellent impregnation ability for the electrolyte solution may be used. The separator may be a single film or a multi-layer film, for example, is selected from glass fiber, polyester, teflon, polyethylene, polypropylene, polyvinylidene fluoride, polytetrafluoroethylene (PTFE) or a combination thereof, and may be in the form of a nonwoven fabric or a woven fabric. In addition, a mixed multilayer film such as a polyethylene/polypropylene 2-layer separator, polyethylene/polypropylene/polyethylene 3-layer separator, polypropylene/polyethylene/ polypropylene 3-layer separator may be used. For example, a winding separator such as polyethylene, polypropylene, and the like may be used in a lithium ion cell, and a separator having an excellent impregnation ability for an electrolyte solution may be used in a lithium ion polymer cell. For example, the separator may be prepared according to the following method.

A separator composition is prepared by mixing a polymer resin, a filler and a solvent. The separator composition is directly coated on the electrode and dried to form a separator. Alternatively, after the separator composition is casted and dried on a support, a separator film peeled off from the support may be laminated on the electrode to form a separator.

The polymer resin used in the production of the separator is not particularly limited, and all materials used as a binder of the electrode plate may be used. For example, vinylidene fluoride/hexafluoropropylene copolymer, polyvinylidene fluoride (PVDF), polyacrylonitrile, polymethyl methacrylate, or a mixture thereof, may be used.

Next, an electrolyte is prepared.

For example, the electrolyte may be an organic electrolyte solution. In addition, the electrolyte may be a solid. For example, the electrolyte may be boron oxide, lithium oxynitride, and the like, but is not limited thereto, and all that may be used as a solid electrolyte in the related art may be used. The solid electrolyte may be formed on the negative electrode by using a method such as sputtering.

For example, the organic electrolyte solution may be prepared by dissolving lithium salt in an organic solvent.

For the organic solvent, all that may be used as an organic solvent in the art may be used. For example, the organic solvent may be cyclic carbonate such as propylene carbonate, ethylene carbonate, fluoroethylene carbonate, butylene carbonate, vinylene carbonate, etc.; chain-like carbonate such as dimethylcarbonate, diethyl carbonate, methyl ethyl carbonate, methylpropylcarbonate, ethyl propylcarbonate, methyl isopropylcarbonate, dipropylcarbonate, dibutylcarbonate, etc.; ethers such as methyl acetate, ethyl acetate, propyl acetate, methyl propionate, ethyl propionate, γ-butyrolactone, etc.; nitriles such as acetonitrile; and amides such as dimethylformamide, etc. The organic solvents may be used alone or in combination of a plurality of numbers. For example, a solvent in which cyclic carbonate and chain-like carbonate are mixed may be used.

In addition, a gel polymer electrolyte in which a polymer electrolyte such as polyethylene oxide or polyacrylonitrile is impregnated with an electrolyte solution, or an inorganic solid electrolyte such as Lil, Li₃N, LiₓGe_{y}P_{z}S_{α}, and LiₓGe_{y}P_{z}S_{α}X_{δ} (X=F, Cl, Br) may be used.

For the lithium salts, all that may be used as lithium salts in the art may be used. For example, the lithium salts may be LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (x and y are natural numbers), LiCl, Lil, or a combination thereof.

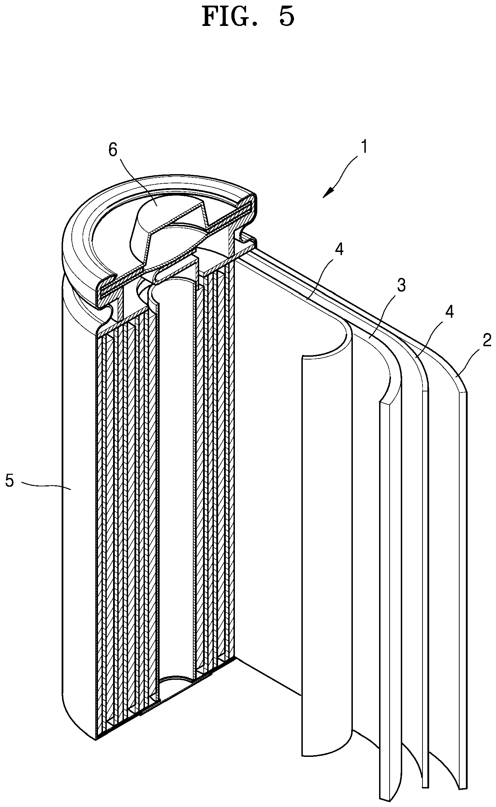

As shown in FIG. 5, the lithium battery 1 includes a positive electrode 3, a negative electrode 2, and a separator 4. The above-described positive electrode 3, negative electrode 2, and separator 4 are winded or folded to be accommodated in the battery case 5. Subsequently, an organic electrolyte solution is injected into the battery case 5, and the battery case 5 is sealed with a cap assembly 6, and a lithium battery is completed. The battery case 5 may be a cylindrical type, a square type, a pouch type, a coin type, a thin film type, etc. For example, the lithium battery 1 may be a thin film type battery. The lithium battery 1 may be a lithium ion battery.

A separator may be arranged between the positive electrode and the negative electrode to form a battery structure. When the battery structure is laminated in a bi-cellular structure, impregnated with an organic electrolyte, and accommodated in a pouch and sealed, a lithium ion polymer battery is completed.

In addition, a plurality of the battery structures may be laminated to form a battery pack, and such a battery pack may be used for all devices that require high capacity and high power. For example, the battery pack may be used in a laptop, a smartphone, an electric vehicle, and the like.

Furthermore, since the lithium battery is excellent in lifespan characteristics and high rate characteristics, the lithium battery may be used in electrical vehicles (EV). For example, the lithium battery may be used in a hybrid vehicle such as a plug-in hybrid electric vehicle (PHEV). Furthermore, the lithium battery may be used in a field in which a large amount of power storage is required. For example, the lithium battery may be used in an electric bicycle, a power tool, a power storage system, and the like.

The present disclosure is described in more detail with reference to the following manufacturing examples, examples, and comparative examples. However, the examples are intended to illustrate the present disclosure, and the scope of the present disclosure is not limited by the examples.

### (Preparation of positive active material)

### Preparation Examples 1 to 19

After mechanically mixing the materials of specific contents shown in Tables 1 and 2 for about 15 minutes, the mixed powder was calcined at 960 °C for 4 hours and at 700 °C for 10 hours to synthesize a positive active material.

**[Table 1]**

| | | Preparation Example 1 | Preparation Example 2 | Preparation Example 3 | Preparation Example 4 | Preparation Example 5 | Preparation Example 6 | Preparation Example 7 | Preparation Example 8 | Preparation Example 9 | Preparation Example 10 |
|---|---|---|---|---|---|---|---|---|---|---|---|
| Transition metal oxide | Ni_{0.88}Co₀ . ₀₉Al_{0.03}(0 H)₂ | 100 g | 100 g | 100 g | - | - | 100 g | 100 g | 100 g | 100 g | 100 g |
| | Ni_{0.88}Co₀. ₁₀Mn_{0.10}( OH)₂ | - | - | - | 100 g | 100 g | - | - | - | - | - |
| | LiOH·H₂ O (about 20 µm) | 45.9 g | 45.9 g | 45.9 g | 45.6 g | 45.6 g | 46.7 g | 45.9 g | 45.7 g | 43.8 g | 45.9 g |
| | Li₂SO₄·H ₂O | 0.37 g | 0.37 g | 0.37 g | 0.35 g | 0.35 g | | 0.37 g | 0.74 g | 3.7 g | 0.37 g |
| | NaOH | 0.05 g | 0.05 g | 0.05 g | 0.05 g | 0.05 g | 0.05 g | | | | 0.05 g |
| | WO₃ | 0.15 g | 0.35 g | 0.25 g | 0.25 g | 0.25 g | 0.35 g | | | | |
| | MgCO₃ | 0.05 g | 0.18 g | 0.08 g | 0.08 g | 0.18 g | | | | | 0.05 g |
| | TiO₂ | 0.05 g | 0.18 g | 0.08 g | 0.08 g | 0.18 g | | | | | 0.05 g |

**[Table 2]**

| | | Prep arati on Exa mple 11 | Prep arati on Exa mple 12 | Prep arati on Exa mple 13 | Prep arati on Exa mple 14 | Prep arati on Exa mple 15 | Prep arati on Exa mple 16 | Prep arati on Exa mple 17 | Prep arati on Exa mple 18 | Prep arati on Exa mple 19 |
|---|---|---|---|---|---|---|---|---|---|---|
| Transition metal oxide | Ni_{0.08}Co_{0.0 9}Al_{0.03}(OH )₂ | 100g | 100g | 100g | 100g | 100g | 100g | - | - | - |
| | Ni_{0.80}Co_{0.1 0}Mn_{0.10}(O H)2 | - | - | - | - | - | - | 100g | 100g | 100g |
| | LiOH·H₂O (about 20 µm) | 45.9 g | 45.9 g | 45.9 g | 45.9 g | 45.9 g | 45.9 g | 45.6 g | 45.6 g | 45.6 g |
| | Li₂SO₄·H₂ O | 0.37 g | 0.37 g | 0.37 g | 0.37 g | 0.37 g | 0.37 g | 0.35 g | 0.35 g | 0.35 g |
| | NaOH | 0.05 g | 0.05 g | 0.05 g | 0.05 g | 0.05 g | 0.05 g | 0.05 g | 0.05 g | 0.05 g |
| | WO₃ | | 0.40 g | 0.38 g | 0.12 g | 0.35 g | 0.13 g | - | 0.40 g | 0.13 g |
| | MgCO₃ | 0.18 g | 0.18 g | 0.05 g | 0.05 g | 0.05 g | 0.05 g | 0.18 g | 0.18 g | 0.05 g |
| | TiO₂ | 0.18 g | 0.18 g | 0.05 g | 0.05 g | 0.05 g | 0.05 g | 0.18 g | 0.18 g | 0.05 g |

### (Preparation of half-cell)

### Example 1

The positive active material obtained in Example 1: conductive material: binder were mixed at a weight ratio of 96: 2: 2 to prepare slurry. Here, carbon black (Super-P) was used as the conductive material, and polyvinylidene fluoride (PVDF) dissolved in N-methyl-2-pyrrolidone solvent was used as a binder.

The slurry was uniformly applied to the Al current collector, dried at 110 °C for 2 hours to prepare a positive electrode. The loading level on the electrode plate was 11.0 mg/cm², and the electrode density was 3.6 g/cc.

The prepared positive electrode was used as a working electrode, and the lithium foil was used as a count electrode, and a CR2032 half-cell was prepared according to a process known in the art by using a liquid electrolyte solution, in which LiPF*₆*, as a lithium salt, was added to a concentration of 1.3 M to a mixed solvent where EC/EMC/DEC were mixed at a volume ratio of 3/4/3.

### Examples 2 to 5

A CR2032 half-cell was prepared in the same manner as in Example 1, except that the positive active materials synthesized in Preparation Examples 2 to 5 were used, instead of the positive active material synthesized in Preparation Example 1.

### Comparative Examples 1 to 14

A CR2032 half-cell was prepared in the same manner as in Example 1, except that the positive active materials synthesized in Preparation Examples 6 to 19 were used, instead of the positive active material synthesized in Preparation Example 1.

### Evaluation Example 1: SEM and XPS analyses

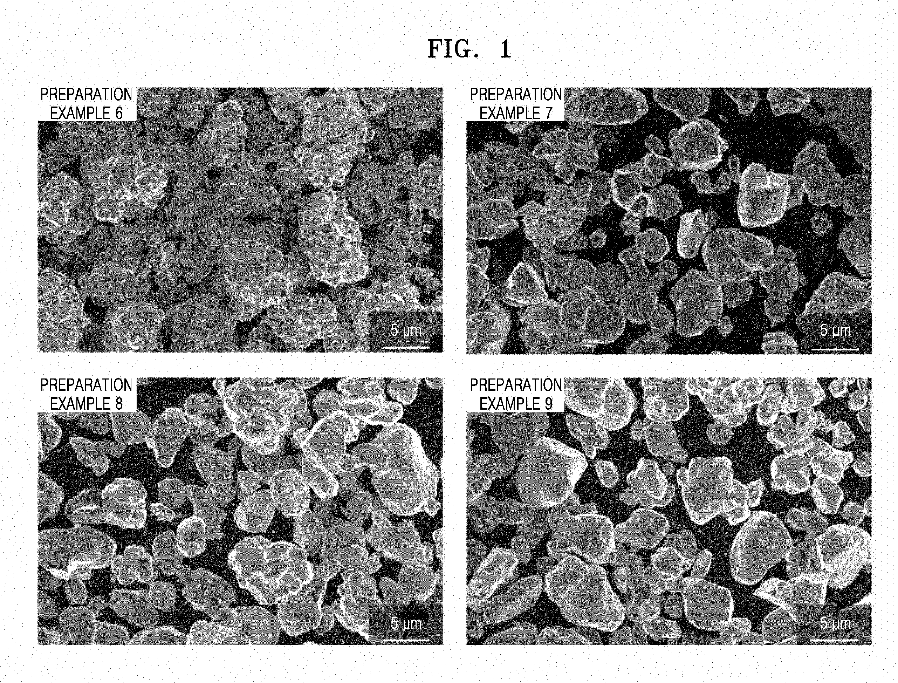

The positive active materials synthesized in Preparation Examples 6 to 9 were analyzed by using a scanning electron microscope (SEM), and the SEM images were shown in FIG. 1. Preparation Example 6, in which lithium sulfate was not added, was confirmed to have a form of secondary particles, but in all of Preparation Examples 7 to 9, in which lithium sulfate was added, it may be confirmed that positive active materials in the form of single particles or an aggregate of single particles were synthesized.

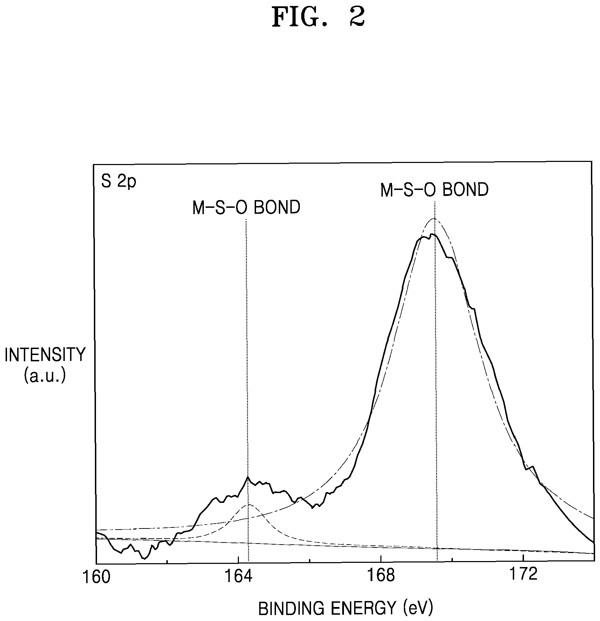

In addition, an X-ray photoelectron spectroscopy (XPS) analysis was performed on the positive active material prepared in Preparation Example 1, in order to confirm whether or not oxygen sites in the crystal were substituted with S, and the results are shown in FIG. 2. Referring to FIG. 2, as a result of the XPS analysis, raw data including noise (indicated by a dark solid line) were obtained, and two main peaks of about 164 eV and 170 eV were observed from the graphs (indicated by two dotted lines) that were fitted by removing noise (light solid line) from the raw data. These peaks means presence of an S-O bond in the structure of the positive active material, which proves that the oxygen sites in the active material are substituted with S.

### Evaluation Example 2: Analysis according to proportion of element S

For the positive active materials synthesized in Preparation Example 1 and Preparation Examples 8 and 9, initial discharge capacity and initial efficiency were measured. The results are shown in Table 3 below.

**[Table 3]**

| | S (ppm) | D50 (µm) | Initial discharge capacity (mAh/g) | Initial efficiency (%) |
|---|---|---|---|---|
| Preparation Example 1 | 970 | 5.1 | 205 | 89 |
| Preparation Example 8 | 1980 | 5.3 | 202 | 88 |
| Preparation Example 9 | 9150 | 5.7 | 195 | 84 |

As proportion of lithium sulfate increased, average particle sizes (D₅₀) increased, and at the same time, reversible capacity decreased. As a result, it may be seen that excessive substitution with S causes a decrease in reversible capacity.

### Evaluation Example 3: Analysis of proportions of elements

Content ratios of Na, doping elements (W, Mg, Ti), and element S in the positive active materials synthesized in Preparation Examples 1 to 3 and Preparation Examples 10 to 16 were analyzed, and the results are shown in Table 4 below.

**[Table 4]**

| | Na (ppm) | W (ppm) | Mg (ppm) | Ti (ppm) | S (ppm) |
|---|---|---|---|---|---|
| Preparation Example 1 | 200 | 1,000 | 200 | 200 | 970 |
| Preparation Example 2 | 200 | 2,400 | 700 | 700 | 970 |
| Preparation Example 3 | 200 | 1,500 | 300 | 300 | 970 |
| Preparation Example 10 | 200 | - | 200 | 200 | 970 |
| Preparation Example 11 | 200 | - | 700 | 700 | 970 |
| Preparation Example 12 | 200 | 2,800 | 700 | 700 | 970 |
| Preparation Example 13 | 200 | 2,600 | 200 | 200 | 970 |
| Preparation Example 14 | 200 | 800 | 200 | 200 | 970 |
| Preparation Example 15 | 200 | 2,400 | 900 | 900 | 970 |
| Preparation Example 16 | 200 | 920 | 30 | 30 | 970 |

As shown in Table 4, it may be seen that in the positive active materials synthesized in Preparation Examples 1 to 3, a content of S is 1,000 ppm or less, and a total content of the doping elements W, Mg and Ti is 1,000 ppm to 4,000 ppm. In addition, in Preparation Examples 10 to 16, it was confirmed that the total content of doping elements was out of the range of 1,000 ppm to 4,000 ppm.

### Evaluation Example 4: Lifespan evaluation at room temperature (1)

After the half-cells prepared in Examples 1 to 3 and Comparative Examples 2, and 5 to 11 were rested for 10 hours, the half-cells were charged at a constant current (CC) mode at 0.2 C to 4.25 V, and then the half-cells were charged at a constant voltage (CV) mode until the current reached 0.05 C. Next, the half-cells were discharged at a CC mode at 0.2 C to 3.0 V, and the formation process was completed.

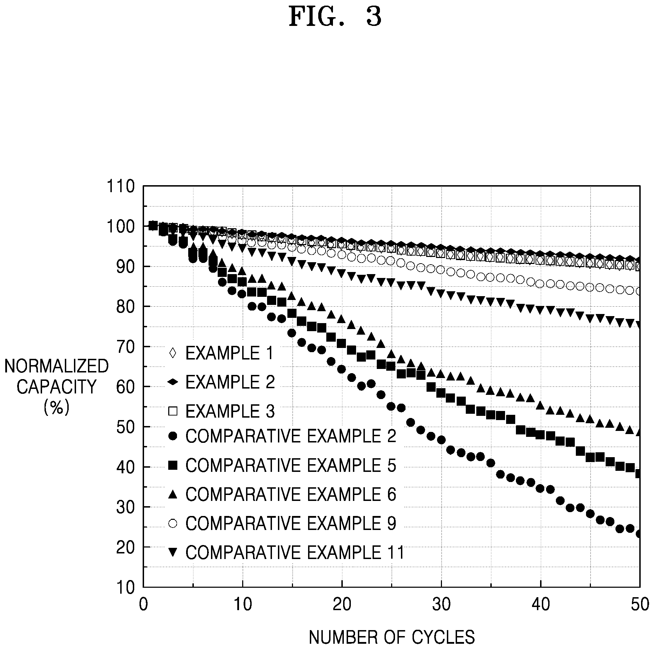

Next, the half-cells were charged at a CC mode at 0.5 C to 4.25 V at room temperature (25 °C), and then were charged at a CV mode to a current of 0.05 C. Next, the half-cells were discharged at a CC mode at 1 C to 3.0 V, and this process was repeated a total of 50 times, and capacity retention rates according to the number of cycles are shown in FIG. 3 and table 6. In addition, initial discharge capacity and initial efficiency were measured and are shown in Table 5 below.

**[Table 5]**

| | Initial discharge capacity (mAh/g) | Initial efficiency (%) |
|---|---|---|
| Comparative Example 2 | 205 | 89 |
| Comparative Example 5 | 205 | 89 |
| Comparative Example 6 | 205 | 89 |
| Comparative Example 7 | 201 | 87 |
| Comparative Example 8 | 201 | 87 |
| Comparative Example 9 | 205 | 89 |
| Comparative Example 10 | 202 | 88 |
| Comparative Example 11 | 205 | 89 |
| Example 1 | 205 | 89 |
| Example 2 | 204 | 89 |
| Example 3 | 205 | 89 |

**[Table 6]**

| | Capacity retention rate after 50 cycles (%) |
|---|---|
| Comparative Example 2 | 23.4 |
| Comparative Example 5 | 38.3 |
| Comparative Example 6 | 48.4 |
| Comparative Example 9 | 83.5 |
| Comparative Example 11 | 75.3 |
| Example 1 | 89.8 |
| Example 2 | 91.4 |
| Example 3 | 90.0 |

Referring to Table 5, in cases of Comparative Examples 7 and 8 employing the positive active materials of Preparation Examples 12 and 13, in which a content of W exceeds 2,500 ppm, and Comparative Example 10 employing the positive active material of Preparation Example 15, in which a content of doping elements exceeds 4,000 ppm, it may be seen that initial reversible capacity and efficiency were lowered compared to Examples 1 to 3. Therefore, lifespan evaluation was performed at room temperature for Comparative Examples 2, 5, 6, 9 and 11, which had similar initial discharge capacity and initial efficiency to Examples 1 to 3.

Referring to Table 6 and FIG. 3, Comparative Examples 2, 5, 6, 9 and 11 had similar initial discharge capacity and initial efficiency to Examples 1 to 3, but showed a sharp decrease in capacity as the charge/discharge cycles progressed. After 50 cycles, Examples 1 to 3 showed a difference in capacity retention rates of up to about 68 %.

It is considered to be due to the total contents of doping elements included in Comparative Examples 2, 5, 6, 9 and 11, being outside the range, whereas the total contents of doping elements included in Examples 1 to 3 are in the range of 1,000 ppm to 4,000 ppm.

### Evaluation Example 5: Lifespan evaluation at room temperature (2)

After the half-cells prepared in Examples 4 and 5 and Comparative Examples 12 to 14 were rested for 10 hours, the half-cells were charged at a CC mode at 0.2 C to 4.25 V, and charged at a CV mode until the current reached 0.05 C. Next, the half-cells were discharged at a CC mode at 0.2 C to 3.0 V, and the formation process was completed.

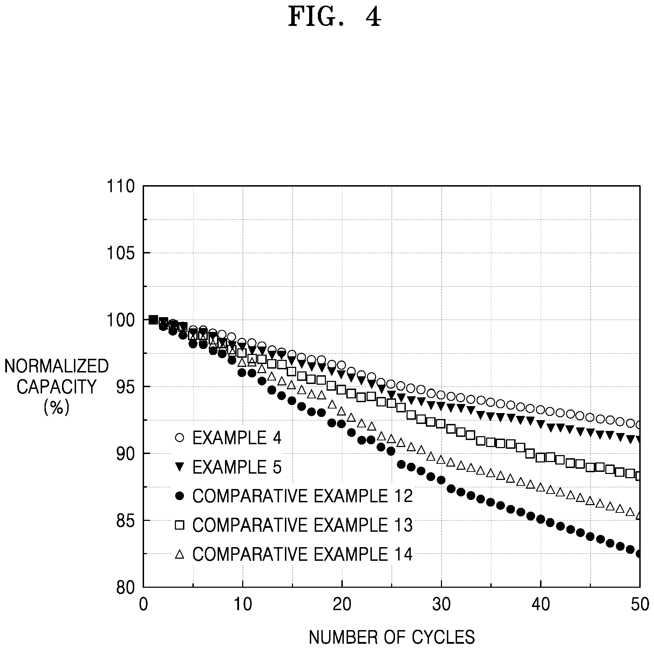

Next, the half-cells were charged at a CC mode at 0.5 C to 4.25 V at room temperature (25 °C), and then were charged at a CV mode to a current of 0.05 C. Next, the half-cells were discharged at a CC mode at 1 C to 3.0 V, and this process was repeated a total of 50 times, and capacity retention rates according to the number of cycles are shown in FIG. 4 and table 7.

**[Table 7]**

| | Capacity retention rate after 50 cycles (%) |
|---|---|
| Comparative Example 12 | 82.6 |
| Comparative Example 13 | 88.3 |
| Comparative Example 14 | 85.4 |
| Example 4 | 92.2 |
| Example 5 | 91.0 |

Referring to FIG. 4 and Table 7, Examples 4 and 5, using the positive active materials of Preparation Examples 4 and 5, in which the total content of doping elements is 1,000 ppm to 4,000 ppm, and the content of S is 1,000 ppm or less, showed improved capacity retention after 50 cycles compared to Comparative Examples 13 and 14, in which the total content of doping elements is less than 1,000 ppm (Comparative Example 14 using the positive active material of Preparation Example 19) or more than 4,000 ppm (Comparative Example 13 using the positive active material of Preparation Example 18). In addition, Examples 4 and 5 showed improved capacity retention compared to Comparative Example 2 using the positive active material of Preparation Example 17 that does not include W. Therefore, it may be seen that NCM-based positive active materials also show high capacity and long life characteristics, when the NCM-based positive active materials include W, a total content of doping elements is 1,000 ppm to 4,000 ppm, and a content of S is less than 1,000 ppm. So far, preferred embodiments according to the present disclosure have been described with reference to the drawings and examples, but they are merely given as examples, and those with an average knowledge in the art will understand that various modifications and equivalent other embodiments are possible. Accordingly, the scope of the present disclosure should be determined by the appended claims.

## Claims

1. A positive active material comprising: a plurality of first particles, an aggregate of a plurality of first particles, or a combination thereof, wherein the first particles have a crystal structure of an α-NaFeO₂ type, include a lithium transition metal oxide including at least one of Ni, Co, Mn, and Al, and a part of transition metal sites in a crystal lattice of the crystal structure are substituted with a doping element M, and a part of oxygen sites in the crystal lattice are substituted with sulfur (S), M includes Mg, Ti, Zr, W, Si, Ca, B, V, or a combination thereof, 1,000 ppm to 4,000 ppm of M is included in the lithium transition metal oxide, and 1,000 ppm or less of S is included in the lithium transition metal oxide.

2. The positive active material of claim 1, wherein the lithium transition metal oxide includes W, and 900 ppm to 2,500 ppm of W is included in the lithium transition metal oxide.

3. The positive active material of claim 1, wherein a part of lithium sites in the crystal lattice of the lithium transition metal oxide are substituted with one or more alkali metal elements.

4. The positive active material of claim 3, wherein 100 ppm to 250 ppm of the alkali metal elements is included in the lithium transition metal oxide.

5. The positive active material of claim 1, wherein the doping element includes Mg, Ti, W, Si, Ca, V, or a combination thereof.

6. The positive active material of claim 1, wherein 1,200 ppm to 4,000 ppm of M is included in the lithium transition metal oxide.

7. The positive active material of claim 1, wherein 80 mol% or more of nickel is included in the lithium transition metal oxide.

8. The positive active material of claim 1, wherein the lithium transition metal oxide is represented by Formula 1 below:
Formula 1 Li₁₋ₓAₓM1_{1-y}M2_{y}O_{2-z}S_{z},
wherein, in Formula 1, A is sodium (Na) or potassium (K), M1 includes Ni, Co, Mn, Al, or a combination thereof, M2 includes Mg, Ti, Zr, W, Si, Ca, B, V, or a combination thereof, and 0<x≤0.05, 0<y<0.05, and 0<z<0.01.

9. The positive active material of claim 1, wherein the lithium transition metal oxide is represented by Formula 2 below:
Formula 2 Li₁₋ₓNaₓM1_{1-α-β}WαM3βO_{2-z}S_{z},
wherein, in Formula 2, M1 includes Ni, Co, Mn, Al, or a combination thereof, M2 includes Mg, Ti, Zr, Si, Ca, B, V, or a combination thereof, and 0<x≤0.05, 0<α≤0.01, 0<β≤0.02, and 0<z<0.01.

10. The positive active material of claim 1, wherein the lithium transition metal oxide is represented by Formula 3 below:
Formula 3 Li₁ₓNaₓM1_{1-α-γ-δ}W_{α}MgγTi_{δ}O_{2-z}S_{z},
wherein M1 includes Ni, Co, Mn, Al, or a combination thereof, and 0<x≤0.05, 0<α≤0.01, 0<y≤0.01, 0<5≤0.01, and 0<z<0.01.

11. The positive active material of claim 10, wherein in Formula 3, 0<y≤0.005, and 0<b≤0.005.

12. The positive active material of claim 10, wherein in Formula 3, γ=δ.

13. The positive active material of claim 1, wherein in the lithium transition metal oxide, a molar ratio of Li / a molar ratio of transition metals is less than 1.

14. The positive active material of claim 1, wherein an average particle diameter (D₅₀) of the lithium transition metal oxide is 1 µm to 20 µm.

15. A method of preparing a positive active material, the method comprising: obtaining a lithium transition metal oxide precursor by mixing an Li-containing compound, a transition metal compound, a sulfur (S)-containing compound, and an element M-containing compound; and heat-treating the precursor to obtain a positive active material comprising a plurality of first particles, an aggregate of a plurality of first particles, or a combination thereof,
wherein the first particles have a crystal structure of an α-NaFeO₂ type, comprise a lithium transition metal oxide including at least one of Ni, Co, Mn, and Al, and a part of transition metal sites in a crystal lattice of the crystal structure are substituted with a doping element M, and a part of oxygen sites in the crystal lattice are substituted with sulfur (S), M includes Mg, Ti, Zr, W, Si, Ca, B, V, or a combination thereof, 1,000 ppm to 4,000 ppm of M is included in the nickel-based lithium transition metal oxide, and 1,000 ppm or less of S is included in the nickel-based lithium transition metal oxide.

16. The method of claim 15, wherein the Li-containing compound comprises a hydroxide of lithium, an oxide of lithium, a nitride of lithium, a carbonate of lithium, or a combination thereof, and the S-containing compound comprises lithium sulfate.

17. The method of claim 15, wherein the Li-containing compound and the S-containing compound are mixed at a molar ratio of 99:1 to 99.9:0.1.

18. The method of claim 15, wherein the heat-treating comprises a first heat treatment and a second heat treatment, and a heat treatment temperature of the first heat treatment is higher than a heat treatment temperature of the second heat treatment.

19. A positive electrode comprising: a positive active material according to any one of claims 1 to 14.

20. A lithium secondary battery comprising: a positive electrode according to any one of claims 1 to 14; a negative electrode; and an electrolyte.
